# FASCICULE DE BREVET EUROPEEN

(11) **EP 0 655 214 B1**
(45) Date de publication et mention de la délivrance du brevet: **08.10.1997**
(21) Numéro de dépôt: 94402715.0
(22) Date de dépôt: 29.11.1994
(51) Int. Cl.: A47J 31/06

(54) **Porte-filtre**
Filterträger
Filter folder

(30) Priorité: 30.11.1993 FR 9314308
(43) Date de publication de la demande: 31.05.1995
(73) Titulaire: Robert Krups GmbH & Co. KG, 42719 Solingen (DE)
(72) Inventeur: Pytlik, Dorothea, D-42719 Solingen (DE); Borgmann, Michael, D-42719 Solingen (DE)
(74) Mandataire: Busquets, Jean-Pierre

(56) Documents cités:
- EP-A- 0 388 975
- EP-A- 0 515 245
- BE-A- 422 708
- DE-A- 4 129 814
- DE-U- 8 110 818
- FR-A- 546 116
- FR-A- 2 454 784
- LU-A- 85 480
- US-A- 2 187 187

## Description

L'invention se rapporte à un porte-filtre destiné à être monté sur une machine à café du type "espresso" comportant une coupelle de réception d'une cuvette dont la paroi de fond forme une surface filtrante et qui est destinée à recevoir une dose de café susceptible d'être de mouture variée. Elle concerne plus particulièrement un porte-filtre qui comporte une chambre collectrice de mousse ménagée entre son fond et la surface filtrante de la cuvette, ladite chambre collectrice communiquant par un couloir de sortie avec des entonnoirs de distribution permettant à l'infusion de s'écouler hors de ladite coupelle, et des moyens d'obturation situés sous la paroi de fond de la cuvette. Un tel porte-filtre est par exemple décrit dans le document DE-41 29 814.

Dans les cafetières "espresso" actuelles, la fabrication de mousse est due à la détente, dans l'infusion sortant du filtre, de bulles d'air qui étaient comprimées généralement entre 10 et 15 bars dans le circuit d'eau de la cafetière. En traversant la mouture de café, la pression de l'eau diminue pour arriver à la pression atmosphérique en sortie de la surface filtrante.

Ce processus de fabrication de mousse est identique quelle que soit la mouture de café utilisée. Or, on constate que le degré de mouture du café influe sur la qualité de la mousse en modifiant la pression dans la cuvette.

L'invention a pour but d'améliorer la production et la qualité de mousse en tenant compte de la pression existant dans le circuit d'eau et dans la cuvette, et de la finesse de la mouture du café utilisé.

Selon l'invention, les moyens d'obturation obturent partiellement la surface filtrante de la paroi de fond de la cuvette selon un degré d'obturation prédéfini.

Grâce à ces moyens, on obtient par variation du degré d'obturation de ladite surface filtrante, une régulation de l'écoulement de l'infusion dans la cuvette et par là de la pression dans cette dernière. Cette régulation de pression se fait en tenant compte de la finesse de la mouture du café utilisé et permet d'obtenir ainsi une mousse de qualité.

Les caractéristiques et avantages de l'invention ressortiront d'ailleurs de la description qui va suivre, à titre d'exemple, en référence aux dessins annexés dans lesquels :
- la figure 1 est une vue en coupe verticale d'un porte-filtre selon l'invention équipé d'une coupelle et d'une cuvette filtrante ;
- la figure 2 est une coupe verticale de la coupelle seule de la figure 1 ;
- la figure 3 est une vue de dessus de la coupelle de la figure 2 ;
- la figure 4 est une vue de dessus de la cuvette de la figure 1 ;
- la figure 5 représente des moyens d'obturation réalisés par une plaque comportant des volets d'obturation selon un deuxième mode de réalisation de l'invention ;
- la figure 6 représente un porte-filtre muni de la plaque comportant les volets d'obturation selon la figure 5.

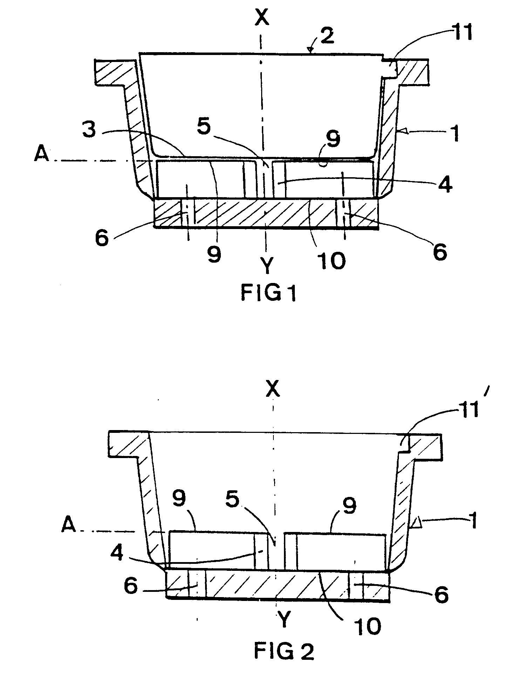

Le porte-filtre représenté aux figures 1 et 2 est destiné à être monté de manière amovible sur une machine à café du type "espresso" et comprend, de façon connue en soi, une coupelle 1 de réception d'une cuvette amovible 2 comportant un fond à surface filtrante 3. Ladite cuvette 2 est destinée à recevoir une dose de café susceptible d'être de mouture variée. Ladite coupelle 1 comporte également une chambre 4 collectrice d'infusion située sous ladite surface filtrante 3 et communiquant par un couloir de sortie 5 avec des entonnoirs de distribution 6 permettant à l'infusion de s'écouler hors de ladite coupelle 1.

Selon une caractéristique essentielle de l'invention, le porte-filtre comporte des moyens d'obturation partielle de la surface filtrante 3 de la paroi de fond de la cuvette 2.

Ces moyens d'obturation permettent de régler de manière simple la pression dans la cuvette 2 en fonction des degrés de finesse de la mouture du café. En effet, lorsque le café est finement moulu, l'écoulement de l'infusion dans la chambre collectrice 4 est lent. Dans ce cas, pour accélérer cet écoulement on réduit l'obturation de la surface filtrante 3 de la paroi de fond de la cuvette 2, et il en résulte une baisse plus rapide de la pression dans ladite cuvette 2. Au contraire, si la mouture du café est moins fine, on accroît l'obturation de la surface filtrante 3 pour provoquer ainsi le ralentissement de l'écoulement de l'infusion dans la coupelle 1 et partant, le maintien d'une pression importante dans la cuvette 2.

Selon un mode de réalisation préféré de l'invention représenté aux figures 1 à 4, la surface filtrante 3 de la paroi de fond de la cuvette 2 comporte des zones perforées 7 et des zones non perforées 8 et les moyens d'obturation sont formés par des plages obturatrices 9 portées par des bossages agencés dans le fond 10 de la coupelle 1 et situées à distance dudit fond 10 à un niveau A de telle sorte que la paroi de fond de la cuvette 2 puisse occuper une position adjacente au niveau A desdites plages obturatrices 9. Ladite cuvette 2 est montée mobile en rotation autour d'un axe vertical X-Y de manière à occuper des positions filtrantes dans la coupelle 1 correspondant à des degrés différents de recouvrement des zones perforées 7 par les plages obturatrices 9.

Un système d'indexation classique, tel que des ergots 11 portés par la cuvette 2 et des crans 11' portés par la coupelle 1, permet de maintenir, en position angulaire, la coupelle 1 par rapport à la cuvette 2 de manière à garantir l'obturation choisie entre les zones perforées 7 de la surface filtrante 3 et les plages obturatrices 9. Pour améliorer l'obturation, lesdites plages obturatrices 9 peuvent être garnies de joints d'étanchéité, en silicone par exemple.

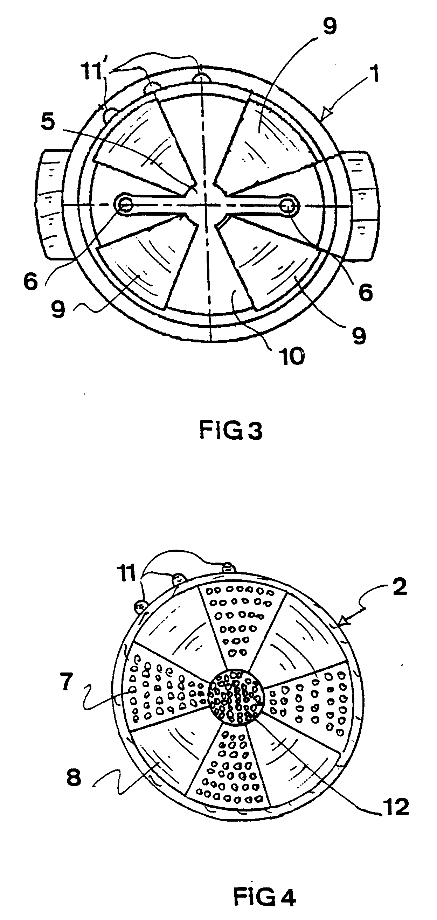

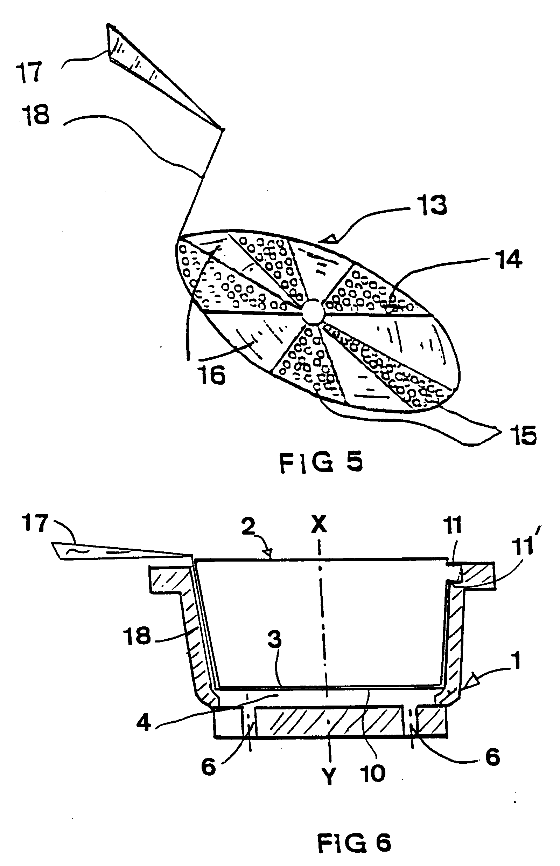

De préférence, comme on le voit aux figures 3 et 4, le porte-filtre a une forme circulaire, et la surface filtrante 3 de la paroi de fond de la cuvette 2 est formée de zones disposées en secteurs perforés 7 alternés avec des secteurs non perforés 8. Les secteurs 7 peuvent être au nombre de quatre ainsi que les secteurs 8. Les plages obturatrices 9, comme on peut le voir sur la figure 3, sont également disposées en secteurs, soit quatre secteurs alternés de manière à permettre un réglage indexé du degré d'obturation de la surface filtrante 3 de la paroi de fond de la cuvette 2. L'espace enfermé entre ladite paroi de fond de la cuvette 2 et le fond 10 de la coupelle 1, constitue une chambre collectrice d'au moins 5 mm de hauteur.

Ainsi, lorsqu'on veut obtenir une pression élevée, donc une mousse abondante, on positionne la cuvette 2 dans la coupelle 1 de manière à ce que les plages obturatrices 9 soient en regard des zones perforées 7 de la surface filtrante 3. Au contraire, si on désire créer une faible pression donc une faible mousse dans la cuvette, lesdites plages obturatrices 9 seront mises en regard des zones non perforées 8 de la surface filtrante 3. Plusieurs positions intermédiaires entre la position où aucune zone perforée 7 n'est obturée, correspondant à une pression minimale et la position où seule une zone perforée appelée zone de sécurité 12 située au centre de la cuvette 2 reste constamment non obturée quelle que soit la position de ladite cuvette 2 dans la coupelle réceptrice 1. Cette disposition correspondant à une pression maximum dans la cuvette 2.

Avec un tel système, on réalise un réglage de la pression dans la cuvette qui prend en compte la finesse de la mouture du café.

Selon un autre exemple de réalisation de l'invention non représenté sur les dessins, les moyens d'obturation étant formés par au moins une plage obturatrice 9 agencée dans le fond 10 de la coupelle 1 et distante dudit fond 10 à un certain niveau A, la cuvette 2 est montée mobile en hauteur de manière à occuper au moins deux positions, soit une position d'obturation pour laquelle une partie de la surface filtrante 3 est amenée adjacente au niveau A de la plage obturatrice, soit une position d'écoulement pour laquelle la surface filtrante 3 est située à distance de ladite plage.

Selon encore un autre mode de réalisation illustré aux figures 5 et 6 et dans lequel on a repris les mêmes références pour désigner les pièces similaires aux figures 1 à 4, la cuvette 2 du porte-filtre présente des secteurs alternés perforés et non perforés (comme illustré à la figure 4) et occupe une position fixe dans la coupelle 1. Dans ce cas, la régulation de l'écoulement de l'infusion dans la coupelle 1 et partant, de la pression dans ladite cuvette est obtenue, à l'aide de volets d'obturation mobiles par rapport à la surface filtrante 3 de ladite cuvette 2. Ces volets sont formés dans une plaque 13 comportant une surface plane 14 ayant une forme similaire à la surface filtrante 3 de la cuvette 2 comme cela est représenté à la figure 5. Lesdits volets sont constitués de plages perforées 15 alternées avec des plages pleines 16. La plaque 13 est montée mobile en rotation autour de l'axe X-Y de la cuvette 2 et est munie d'une poignée 17 qui fait saillie entre les bords supérieurs respectifs de la coupelle 1 et de la cuvette 2 comme cela est représenté à la figure 6. La poignée 17 comporte une branche 18 qui peut se déplacer circulairement entre la coupelle 1 et la cuvette 2 et qui relie la poignée 17 à la surface plane 14 de la plaque 13. Ainsi, en faisant tourner la plaque 13 et donc les volets autour de l'axe vertical X-Y, on obture plus ou moins les secteurs perforés de la surface filtrante 3 en tenant compte de la finesse de la mouture du café.

L'invention permet d'améliorer la fabrication de mousse dans les cafetières "espresso" en effectuant de manière simple une régulation de l'écoulement de l'infusion à travers la surface filtrante 3 de la paroi de fond de la cuvette 2 et par conséquent de la pression qui règne dans ladite cuvette. Ce réglage tient compte de la mouture du café utilisé et du désir de l'utilisateur d'avoir un café plus ou moins corsé.

## Revendications

1. Porte-filtre comportant une coupelle (1) destinée à être montée sur une machine à café du type "espresso" et comportant une cuvette (2) dont la paroi de fond forme une surface filtrante (3) et qui est destinée à recevoir une dose de café susceptible d'être de mouture variée et du liquide sous pression, ladite coupelle comportant également une chambre collectrice de mousse (4) ménagée entre son fond (10) et ladite surface filtrante (3) et communiquant par un couloir de sortie (5) avec des entonnoirs de distribution (6), de manière à permettre à l'infusion de s'écouler hors de ladite coupelle (1), et des moyens d'obturation situés sous la paroi de fond de la cuvette (2),
**caractérisé en ce que** lesdits moyens d'obturation obturent partiellement ladite surface filtrante (3) selon un degré d'obturation prédéfini de manière à régler la pression du liquide dans la cuvette en fonction des degrés de finesse de la mouture.

2. Porte-filtre selon la revendication 1,
**caractérisé en ce que** les moyens d'obturation sont formés par au moins une plage obturatrice (9) agencée dans le fond (10) de la coupelle (1) et distante dudit fond (10) à un certain niveau (A), et la cuvette (2) est montée mobile en hauteur de manière à occuper au moins deux positions, soit une position d'obturation pour laquelle une partie de la surface filtrante (3) est amenée adjacente au niveau A de la plage obturatrice (9), soit une position d'écoulement pour laquelle la surface filtrante (3) est située à distance de ladite plage obturatrice.

3. Porte-filtre selon la revendication 1,
**caractérisé en ce que** la surface filtrante (3) de la paroi de fond de la cuvette (2) comporte des zones perforées (7) et des zones non perforées (8).

4. Porte-filtre selon la revendication 3,
**caractérisé en ce que** les moyens d'obturation sont formés par des plages obturatrices (9) portées par des bossages agencés dans le fond (10) de la coupelle (1) et situées à distance dudit fond (10) à un certain niveau (A), ladite cuvette (2) ayant sa paroi de fond adjacente au niveau (A) desdites plages obturatrices et étant montée mobile en rotation autour d'un axe vertical (X-Y) de manière à occuper des positions différentes dans la coupelle (1) correspondant à des degrés différents de recouvrement des zones perforées (7) par les plages obturatrices (9).

5. Porte-filtre selon la revendication 3 ou 4,
**caractérisé en ce que** les zones perforées (7) et les zones non perforées (8) constituant la surface filtrante (3) de la cuvette (2) sont disposées en secteurs alternés.

6. Porte-filtre selon la revendication 5,
**caractérisé en ce que** la cuvette (2) comporte au moins une zone perforée de sécurité (12) ne pouvant jamais être obturée par les plages obturatrices (9) quelle que soit la position de la cuvette (2) dans la coupelle (1).

7. Porte-filtre selon la revendication 3,
**caractérisé en ce que** les moyens d'obturation sont formés dans une plaque (13) montée mobile en rotation autour de l'axe vertical (X-Y) de la cuvette (2), et comportant une surface (14) partiellement perforée.

8. Porte-filtre selon la revendication 7,
**caractérisé en ce que** la plaque (13) comporte une poignée (17) faisant saillie entre les bords supérieurs respectifs de la coupelle (1) et de la cuvette (2) et la surface (14) comporte des volets constitués de plages perforées (15) disposées en secteurs et alternées avec des plages pleines (16).

## Claims

1. Filter holder having a dish (1) designed to be mounted on a coffee machine of the "espresso" type and having a cup (2) whose bottom wall forms a filtering surface (3) and which is designed to receive a quantity of coffee, the fineness of whose grounds may vary, and liquid under pressure, said dish also having a collection chamber for froth (4) provided between its bottom (10) and said filtering surface (3), and communicating via an exit passage (5) with distribution funnels (6) enabling the infusion to flow out of said dish (1), and blocking means located under the bottom wall of the cup (2), characterized in that said blocking means partially block said filtering surface (3) with a predetermined degree of blocking in order to regulate the pressure of the liquid in the cup as a function of the degrees of fineness of the grounds.

2. Filter holder according to claim 1, characterized in that the blocking means are formed by at least one blocking area (9) arranged in the bottom (10) of the dish (1) and distant from said bottom (10) at a certain level (A), and the cup (2) is mounted so as to be able to move in height so as to occupy at least two positions, either a blocking position in which a part of the filtering surface (3) is brought adjacent to the level A of the blocking area (9), or an outflow position in which the filtering surface (3) is situated at a distance from said blocking area.

3. Filter holder according to claim 1, characterized in that the filtering surface (3) of the bottom wall of the cup (2) has perforated zones (7) and non-perforated zones (8).

4. Filter holder according to claim 3, characterized in that the blocking means are formed by blocking areas (9) carried by bosses arranged in the bottom (10) of the dish (1) and situated at a distance from said bottom (10) at a certain level (A), said cup (2) having its bottom wall adjacent to the level (A) of said blocking areas and being mounted so as to move in rotation about a vertical axis (X-Y) so as to occupy different positions in the dish (1) corresponding to different degrees of covering of the perforated zones (7) by the blocking area (9).

5. Filter holder according to claim 3 or 4, characterized in that the perforated zones (7) and the non-perforated zones (8) forming the filtering surface (3) of the cup (2) are arranged as alternating sectors.

6. Filter holder according to claim 5, characterized in that the cup (2) has at least one perforated safety zone (12) which can never be blocked by the blocking areas (9), whatever the position of the cup (2) in the dish (1).

7. Filter holder according to clam 3, characterized in that the blocking means are formed in a plate (13), mounted so as to move in rotation about the vertical axis (X-Y) of the cup (2), and having a partially perforated surface (14).

8. Filter holder according to claim 7, characterized in that the plate (13) has a handle (17) which projects between the respective upper edges of the dish (1) and of the cup (2) and the surface (14) has shutters consisting of perforated areas (15) arranged in sectors and alternating with solid areas (16).

## Patentansprüche

1. Filterhalter mit einer Schale (1), die an einer Espresso-Kaffeemaschine anbringbar ist und einen Einsatz (2) aufweist, dessen Boden eine Filterfläche (3) bildet und der eine bestimmte Menge Kaffee, der unterschiedlich fein gemahlen sein kann, und Flüssigkeit unter Druck aufnimmt, wobei die Schale auch eine zwischen ihrem Boden (10) und der Filterfläche (3) angeordnete Kammer (4) zum Sammeln des Schaums aufweist, die über einen Ausfluß (5) mit Vertellertrichtern (6) verbunden ist, so daß der Kaffee aus der Schale (1) fließen kann, sowie Abdeckelemente aufweist, die unter dem Boden des Einsatzes (2) angeordnet sind, **dadurch gekennzeichnet, daß** die Abdeckelemente die Filterfläche (3) teilweise mit einem vorbestimmten Abdeckgrad abdecken, so daß der Druck der Flüssigkeit im Einsatz je nach Feinheitsgrad des Kaffeemehls geregelt werden kann.

2. Filterhalter nach Anspruch 1, **dadurch gekennzeichnet, daß** die Abdeckelemente durch mindestens einen Abdeckbereich (9) gebildet sind, der im Boden (10) der Schale (1) durch eine bestimmte Höhe (A) vom Boden (10) beabstandet angeordnet ist, und der Einsatz (2) in unterschiedlicher Höhe anbringbar ist, so daß er mindestens zwei Stellungen einnehmen kann, eine Verschlußstellung, in der ein Teil der Filterfläche (3) auf die Höhe (A) des Abdeckbereichs (9) zu liegen kommt, oder eine Fließstellung, in der sich die Filterfläche (3) vom Abdeckbereich (9) entfernt befindet.

3. Filterhalter nach Anspruch 1, **dadurch gekennzeichnet, daß** die Filterfläche (3) des Bodens des Einsatzes (2) perforierte Zonen (7) und nicht perforierte Zonen (8) aufweist.

4. Filterhalter nach Anspruch 3, **dadurch gekennzeichnet, daß** die Abdeckelemente durch Abdeckbereiche (9) gebildet sind, die durch im Boden (10) der Schale (1) angeordnete Träger getragen werden und vom Boden (10) in einer bestimmten Höhe (A) entfernt angeordnet sind, wobei der Boden des Einsatzes (2) sich auf der Höhe (A) der Abdeckbereiche (9) befindet und um eine vertikale Achse X-Y frei drehbar gehalten ist, so daß er in der Schale (1) Stellungen einnehmen kann, die sich im Grad der Abdeckung der perforierten Zonen (7) durch die Abdeckbereiche (9) unterscheiden.

5. Filterhalter nach Anspruch 3 oder 4, **dadurch gekennzeichnet, daß** die perforierten Zonen (7) und die nicht perforierten Zonen (8), die die Filterfläche (3) des Einsatzes (2) bilden, in aufeinanderfolgenden Sektoren angeordnet sind.

6. Filterhalter nach Anspruch 5, **dadurch gekennzeichnet, daß** der Einsatz (2) mindestens eine perforierte Sicherheitszone (12) aufweist, die unabhängig von der Stellung des Einsatzes (2) in der Schale (1) nie von den Abdeckbereichen (9) verschlossen werden kann.

7. Filterhalter nach Anspruch 3, **dadurch gekennzeichnet, daß** die Abdeckbereiche (9) in einer Scheibe (13) ausgebildet sind, die um die vertikale Achse X-Y des Einsatzes frei drehbar angeordnet ist und eine teilweise perforierte Fläche (14) aufweist.

8. Filterhalter nach Anspruch 7, **dadurch gekennzeichnet, daß** die Scheibe (13) einen Griff (17) aufweist, der zwischen den jewelligen oberen Rändern der Schale (1) und des Einsatzes (2) hervorsteht, und daß die Fläche (14) Verschlußblenden aufweist, die durch in Sektoren angeordnete perforierte Bereiche (15) gebildet sind, die auf nicht perforierte Bereiche (16) folgen.
